# EUROPEAN PATENT APPLICATION

(11) **EP 1 953 696 A1**
(43) Date of publication of application: **06.08.2008**
(21) Application number: 08394005.6
(22) Date of filing: 22.01.2008
(51) Int. Cl.: G06Q 30/00, G06Q 10/00

(54) **A communications system**

(30) Priority: 30.01.2007 IE 20070055
(71) Applicant: Markport Limited, Dublin 2 (IE)
(72) Inventor: Sehgal, Amit, Deharadun-248001 (IN); Rijhwani, Mukesh, Thane, State Maharashtra (IN); Sharma, Sunil, Palam Colony, New Delhi 110045 (IN)
(74) Representative: O'Brien, John Augustine

(57) **Abstract**

A real time message broker (1) comprises classification (2), pairing (4), and location-seeking functionality (3) to perform real time information interchange. The broker (1) interacts automatically and in real time between mobile devices For example, it could perform real time brokering between two people going to a common destination from the same airport terminal, and looking for a partner to share a cab with; or a person willing to sell a movie ticket and another person looking for the movie ticket. Once a request message, written in natural language (need not have a pre-fixed format), using existing cellular technology, is passed on to the broker (1), it is picked up by the classification engine (2), which categorizes the message using a real time classification algorithm. The pairing engine (4) picks up the filtered and categorized data and maps it to another request message. The logic of classification and pairing is combined with the geographical proximity of the devices to enable real time information interchange.

## Description

### INTRODUCTION

### Field of the Invention

The invention relates to communication networks such as mobile networks, and particularly provision of location - based services via mobile networks.

Location-based services are currently provided on the basis of identifying the location of a user according to the network cell the device is registered in, and providing information concerning services available locally.

DE20309319 describes a car-sharing database system for assistance with managing car-sharing services. US6968178 describes a system for broadcasting of advertisements wirelessly to consumers.

The invention is directed towards achieving more comprehensive location-based services using mobile networks.

### Glossary

| **Abbreviation** | **Expansion** |
|---|---|
| 3GPP | 3rd Generation Partnership Program |
| 3I | Instant Information Interchange |
| ANSI | American National Standards Institute |
| AS | Application Server |
| ATI | Any Time Interrogation |
| CSCF | Call Session Control Function |
| ESME | External Short Message Entity |
| GMLC | Gateway MLC |
| GPRS | General Packet Radio Service |
| GSM | Global System for Mobile Communications |
| GW | Gateway |
| HLR | Home Location Register |
| HSS | Home Subscriber Server |
| HTTP | Hypertext Transfer Protocol |
| IM | Instant Message |
| IMS | IP Multimedia Subsystem |
| LCS | LoCation Services |
| MS | Mobile Station |
| MAP | Mobile Application Part |
| MLC | Mobile Location Center |
| MLP | Mobile Location Protocol |
| MMS | Multimedia Messaging Service |
| MPC | Mobile Positioning Center |
| MPS | Mobile Positioning System |
| MSC | Mobile Switching Center |
| MSRP | Message Session Relay Protocol |
| OMA | Open Mobile Alliance |
| PLMN | Public Land Mobile Network |
| PSI | ProvideSubscriberInformation |
| S-CSCF | Serving-Call Session Control Function |
| SGSN | Service GPRS Support Node |
| SIP | Session Initiation Protocol |
| SME | Short Message Entity |
| SMLC | Serving MLC |
| SMPP | Short Message Peer-to-peer Protocol |
| SMS | Short Message Service |
| SMSC | Short Message Service Center |
| SOAP | Simple Object Access Protocol |
| STK | SIM ToolKit |
| TEL URL | Telephone Uniform Resource Locator |
| TTL | Time to live |
| UE | User Equipment |
| URL | Uniform Resource Locator |
| VLR | Visitor Location Register |
| WAP | Wireless Application Protocol |
| WSP | Wireless Session Protocol |
| XML | Extensible Markup Language |

### SUMMARY OF THE INVENTION

According to the invention, there is provided a message broker comprising:
an interface comprising means for receiving, via a mobile network, request messages originating in subscriber mobile devices;
a location identification engine;
a classification engine comprising means for, in real time, determining from the location identification engine locations of originating mobile devices for received messages, and for classifying each received message according to category of request and location of the originating device, to provide filtered requests;
a pairing engine comprising means for, in real time, matching filtered requests; and
an interface comprising means for sending, in real time, messages to at least two originating mobile devices according to said matching to provide real time information interchange, said messages including information identifying matching requests.

In one embodiment, the classification engine comprises means for parsing incoming messages to determine their content.

In one embodiment, the parsing means identifies keywords, and the classification engine also comprises means for associating identified key words with a category according to a category table.

In one embodiment, the table associates a plurality of key words with some categories. In one embodiment, each key word has a weighting according to its relevance to the category. Preferably, there is a category for each of a plurality of request types. Preferably, the categories are inter-linked by parent/child associations.

In one embodiment, the pairing engine comprises means for identifying successive category pairs in parent/child hierarchy traversal.

In one embodiment, the key words include pre-allocated text tags.

In one embodiment, the parsing means recognises words from different natural languages, and the pairing engine comprises means for matching requests having different natural languages.

In one embodiment, the classification engine comprises means for assigning a time-to-live value to a request message, and the broker attempts matching of the message only during the time span of the time-to-live value. Preferably, the classification engine comprises means for determining the time-to-live value according to request message category.

In one embodiment, the pairing engine comprises means for interrogating a database to identify matches, the database storing tables of pairing categories.

In one embodiment, the database comprises means for maintaining a transaction table of paired messages. Preferably, the broker comprises means for updating the database with status data indicating status of an information interchange. Preferably, the broker comprises means for updating the status data in response to receiving a termination instruction from a user device. Preferably, the broker further comprises a purging engine for purging the database of old transaction data. In one embodiment, the purging engine comprises means for purging on the basis of the time-to-live values.

In one embodiment, the location identification engine is a client of an external location server.

In one embodiment, the classification engine comprises means for determining location of a subscriber by parsing a received message including a field including a location identifier.

In one embodiment, the interface comprises plug-in modules each for communication with a type of external entity. Preferably, the interface further comprises a message handler for receiving and routing messages to and from the interface and to and from internal components of the broker.

In one embodiment, the classification engine comprises at least one application and an application factory for dynamically instantiating application instances in real time.

In one embodiment, the pairing engine comprises logic code coupled with application instances.

In one embodiment, the broker further comprises post-matching messaging means for performing message interchange between matched subscribers for them to communicate after being matched. In one embodiment, the post-matching messaging means comprises means for passing messages between the matched subscribers without need for either subscriber to address the other subscriber. Preferably, the post-matching messaging means comprises means for accessing addressing and matching information stored during the pre-matching operations.

In another aspect, the invention provides a computer readable medium comprising software code for performing operations of any message broker as defined above when executing on a digital processor.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram illustrating a message broker and how it interfaces with networks;
Fig. 2 is a diagram illustrating commercial benefits of the invention;
Fig. 3 is a diagram showing the message broker in more detail;
Figs. 4 and 5 are message transfer diagrams illustrating broker internal operation;
Figs. 6 to 11 are diagrams illustrating use cases; and
Fig. 12 is a more detailed block diagram of the system.

### Description of the Embodiments

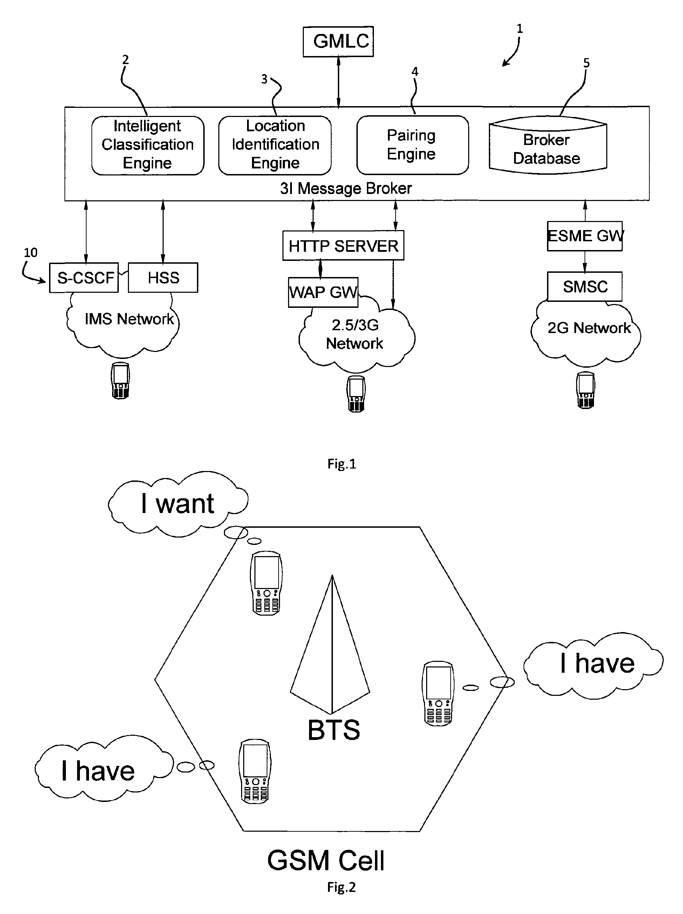

The invention provides an instant information interchange ("3I") message broker comprising classification, pairing, and location-seeking functionality to perform real time information interchange. Referring to Fig. 1 the broker, 1, comprises a classification engine 2, a location identification engine 3, a pairing engine 4, and a broker database 5. The GMLC is shown as a separate entity without any connection because it is common among all networks (2G, 2.5G, 3G and IMS).

The broker 1 interacts automatically and in real time between mobile device users, as illustrated generally in Fig. 2. For example, it could perform real time brokering between two people going to a common destination from the same airport terminal, and looking for a partner to share a cab with; or a person willing to sell a movie ticket and another person looking for the movie ticket. In general terms the broker automatically matches asynchronous, dynamic, requests which originate from subscriber mobile devices. The requests may for example ask to share something, attempt to repatriate a lost item, ask to sell something, or ask to buy something.

Once a request message, written in natural language (need not have a pre-fixed format), using existing cellular technology, is passed on to the broker 1, it is picked up by the classification engine 2, which categorizes the request. The pairing engine 4 picks up the filtered and categorized request and matches it with another filtered request. The logic of classification and pairing is combined with the geographical proximity of the parties (provided by the engine 3) to enable real time information interchange.

In one embodiment (2G), the broker 1 is configured as an ESME to a cellular network via an ESME GW and SMSC as shown in Fig. 1. When a person wants to share instant information, he/she can send an SMS to this ESME for example using a predefined short code (e.g. 8888). The message broker 1 on receiving the SMS, brokers it (classification, pairing and location detection) to find relevant matching entries in the broker database 5. It then informs the requesting user(s) via SMS about the matches.

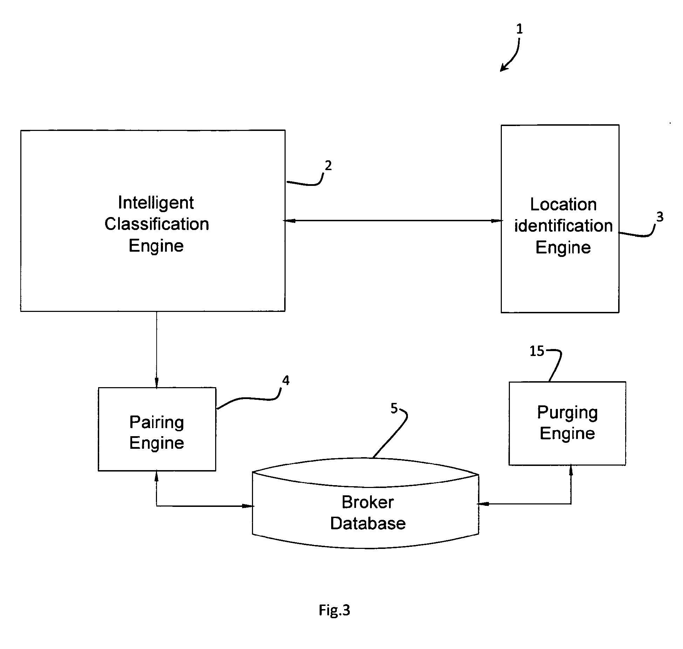

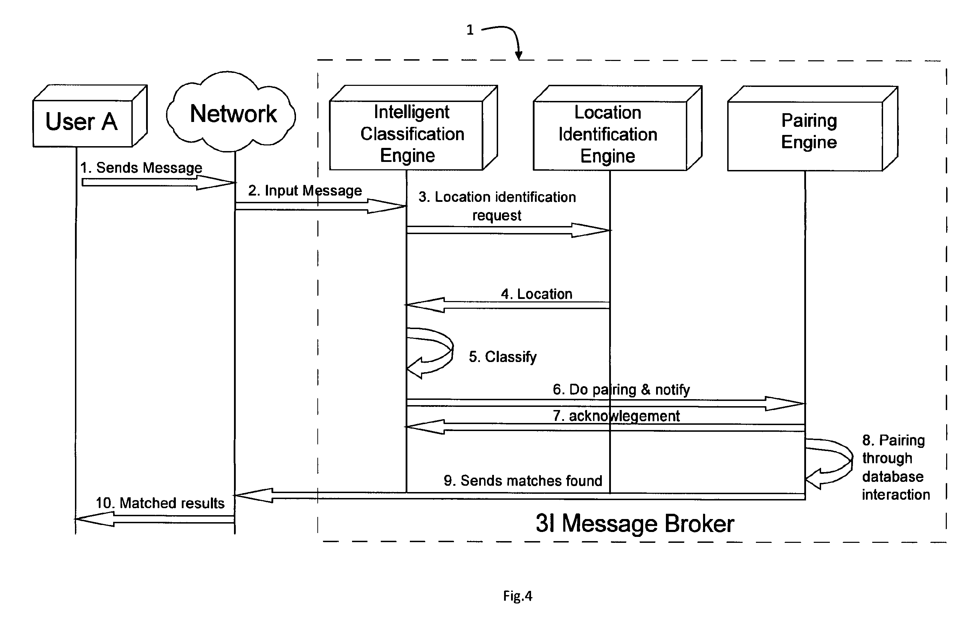

An overview of how the components interoperate is described with reference to Figs 3. to 5. The operations of the message broker 1 for determining matches for a request from User A are as follows:
1. As shown in Fig. 4, User A sends an SMS request message to the network.
2. The message is passed through the ESME GW and the SMSC.
3. The input message is received from the network by the intelligent classification engine 2 which first queries the location of User A by sending a 'Location identification request' to the location engine 3.
4. The location engine 3 establishes the location of User A. The location information (eg. cell-id) will be passed to the classification engine 2.
5. The classification engine 2 then categorizes the message and passes this information, along with the original message (including information such as for example originating subscriber MSISDN), location information and the TTL to the pairing engine 4.
6. The pairing engine receives the original input message, originating subscriber MSISDN, categories, location and the TTL from the classification engine 2.
7. The pairing engine 4 acknowledges the receipt of the message.
8. The pairing engine 4 then queries the database 5 to find the relevant matches.
9. The matches found (including 'no match') are then sent to User A via the network.
10. User A receives the response as an SMS message.
User A is provided with the unique message ID of his request message (not shown explicitly in Fig. 4 unless 'no match' returned).

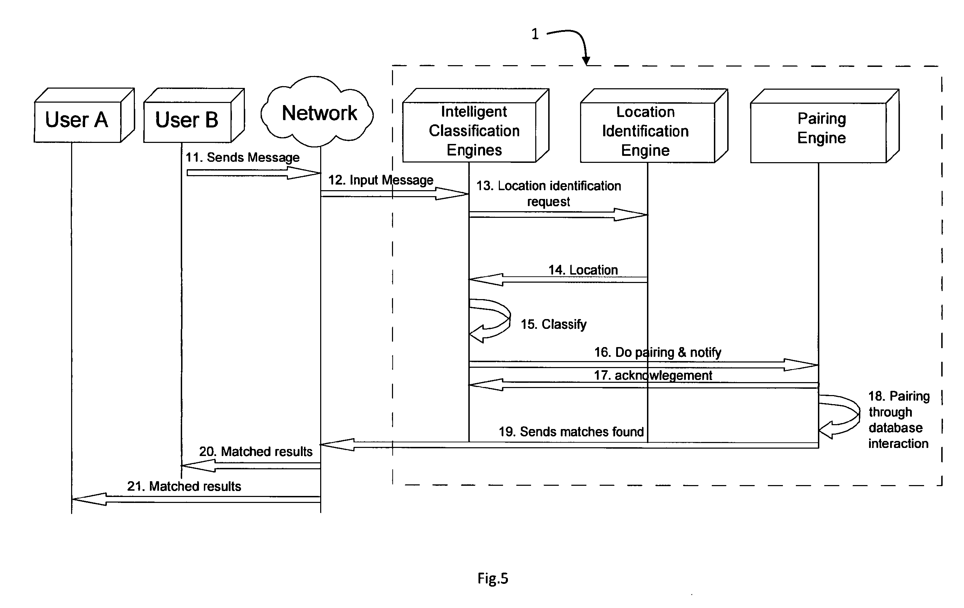

Of course, for the system to find the matches the database must has recorded other current requests from other users. This is illustrated in Fig. 5 for the User B in a sequence of steps 11 to 18, which mirror steps 1 to 8 for User A. The following are the additional steps:
19. The matches found (in this case - match to the message originated by User A) are then communicated to both users, A and B.
20. The details of User A, along with the original message from User A are sent to User B.
21. The details of User B, along with the original message from User B are sent to User A.
Note: User B is provided with the unique message ID of his request message (not shown explicitly in Fig. 5 unless 'no match' returned).

Both users can get in touch with each other to satisfy their common need. These scenarios are described in further detail below.

The details of the major components of the system 1 are as follows:

### Intelligent Classification Engine 2

This accepts the message from the network, and invokes the location identification engine to determine the location of the subscriber. It performs message classification into pre-configured categories, and it sends the message to the pairing engine for further processing.

The classification engine 2 parses the message (SMS) and classifies information into various pre-configured categories. The classification of the message takes place using a weighted keywords approach. Each word in the message is matched against all keywords specified. In the case of a match, the category corresponding to the keyword is selected. Categories, keywords, and corresponding weights are pre-configured and are extendable. Based on the selected category, the request is allotted a 'Time-To-Live' (TTL). Hence for instant need cases e.g. selling of movie tickets, TTL will be quite short and for requests like house for rent, TTL would be relatively longer. Pairing for a particular request is performed only until its TTL expires.

The classification engine 2 invokes the location identification engine 3 to obtain the location of the user. This information, along with the categories and the original message (including information such as for example originating subscriber MSISDN), and the TTL is passed to the pairing engine 4. The pairing engine 4 performs intelligent pairing of the request with other requests and sends the response to the concerned parties. It also stores the requests along with categories and the matched requests in the database.

Below are simple examples of various categories and their associated keywords to illustrate operation of the classification engine 2.

### Classification hierarchy example.

**Table 1: Category types**

| Category type 1 (major - e.g. defines the high level need ) | Category type 2 (minor - e.g. further narrows down the need | Category type 3 (further classifies into e.g. brands/specific/ Location) | Category type 4 ( further classifies into e.g. model, etc.,) |
|---|---|---|---|
| Looking | Real Estate | Nokia | N91 |
| Available | Taxi | Samsung | EasyJet |
| Share | Tickets | Airport | 3310 |
| Lost | | Mall | |
| Found | | | |

Each category has a set of keywords associated with it. Refer to Table 2 for examples of categories and associated keywords and weights.

**Table 2: Categories with associated keywords and weights**

| Category | Associated keywords and weights. |
|---|---|
| Looking | Looking - 80 |
| | Info - 100 |
| | Required - 100 |
| | Reqd - 100 |
| | Needed - 80 |
| | Search* - 90 (Note: '*' shows that |
| | Regular Expressions can also be used. |
| | Example: In this example it will match |
| | 'Search', 'Searching' and also 'Searchin') |
| | Want - 70 |
| | Rent - 60 |
| Sharing | Share* - 100 |
| | Partager - 100 |
| Real Estate | Apartment* - 100 |
| | House - 70 |
| | Apts - 100 |
| | Site - 50 |
| | BHK - 60 |
| | Office - 50 |
| Nokia | Nokia - 100 |
| Airport | Airport - 100 |
| | l'aéroport - 100 |
| N91 | N91 - 100 |
| Taxi | Cab - 100 |
| | Taxi - 100 |
| Mobile | Cell - 100 |
| | Mobile - 80 |
| | Phone - 50 |
| | Cellular - 100 |
| R220 | R220 - 100 |
| 3310 | 3310 - 100 |
| Lost | Lost - 100 |
| | Misplaced - 100 |
| | Missing - 100 |
| Found | Found - 100 |
| | Located - 100 |
| | Retrieved - 100 |

Each category has a parent category associated with it.

### Example:

**Table 3: Categories with associated parent categories**

| Category | Parent Category |
|---|---|
| N91 (Type 4) | Nokia (Type 3) |
| Nokia (Type 3) | Mobile Phone (Type 2) |
| Mobile phone (Type 2) | Looking (Type 1), Available (Type 1) |
| | Lost (Type 1), Found (Type 1) |
| Samsung (Type 3) | Mobile Phone (Type 2) |
| | Electronics (Type 2) |
| Easyjet (Type 4) | Air tickets (Type 3) |
| Air tickets (Type 3) | Tickets (Type 2) |
| Tickets (Type 2) | Looking (Type 1), Available (Type 1) |
| 3310 (Type 4) | Nokia (Type 3) |

The key words, categories and the corresponding weightages can be defined by the operator.

### Examples

Example: A person sends an SMS 'looking for Nokia N91 mobile phone'. The broker 1 matches each word in the SMS against each keyword in the hierarchy that is predefined. It first matches all words 'looking' 'for' 'Nokia' 'N91' 'mobile' 'phone' with category Type 1 keywords. Here the category type 1 is 'looking' (because it matches the keyword 'looking'). It then matches the remaining words ('for' 'Nokia' 'N91' 'mobile' 'phone') with category type 2 keywords. Here the category type 2 is 'Mobile phone'. It further matches the remaining words ('for' 'Nokia' 'N91') with category type 3 keywords. Here the category type 3 is 'Nokia'. Finally, it matches all omitted words ('for' 'N91') with category type 4 keywords. Here the Category type 4 is 'N91'. All four categories along with location, original message (including originating subscriber MSISDN) and TTL are passed to the pairing engine.

In summary, where the input message is 'looking for Nokia N91 mobile phone' the output categories are: Category type 1: 'looking', Category type 2: 'Mobile Phone', Category type 3: 'Nokia', and Category type 4: 'N91' Example: A person sends an SMS 'I want to share a cab to the airport'. 3I performs matching and classification, as explained in Example 1 above. The results obtained are given below.

The input message is: 'I want to share a cab to the airport', and the output categories are: Category type 1: 'share', Category type 2: 'Taxi', Category type 3: 'Airport'.

### Database 5

The database 5 has master tables to store categories and corresponding keywords, and transaction tables to store incoming messages and corresponding matched messages. The table descriptions are given below.

### Category master table:

**Table 4: Category Master Table**

| Column name | Description | Example values |
|---|---|---|
| Name | Name of the category. | 'looking', 'available', 'nokia', 'taxi' |
| Type | Category type could be type 1 to type 4 (configurable). | 1,2,3 or 4 |
| Time_to_live | Validity period associated with this category. | This could range from for example 15 minutes to days. |
| | | e.g. for category 'taxi' it could be 15 minutes. e.g. For category 'real estate' it could be 7 days. |
| Parent | Parent category. Refer to Table 3 | |
| Pairing_category | Contains the name of the category to be paired with. This is used by the Pairing Engine | e.g. for category 'looking' pairing category could be 'available', or for "lost" it would be "found". |

### Keyword master table:

**Table 5: Keyword Master Table**

| Column name | Description | Example values |
|---|---|---|
| Name | Name of the keyword. | 'cell', 'cellular', 'nokia', 'taxi' |
| Category | Category to which it belongs. | It refers to the column 'Name' in the Category Master table |
| Weightage | Weight of this keyword in the category. | This could range from 10 to 100. |
| | | e.g. For category 'taxi', keyword could be 'cab' and its weight could be 100. |
| | | e.g. For category 'share', keyword could be 'want' and its weight could be 50. |

### Transaction table:

The database 5 has a transaction table with the following schema.

**Table 6: Transaction Table**

| Column name | Description |
|---|---|
| Msg_id | Auto-increment number |
| Msisdn | Mobile number (Msisdn) of subscriber |
| Location_id | Location identifier (e.g. cell-id) of subscriber that sent the SMS. |
| Time_to_live | Validity period of message (e.g. SMS). |
| Category_type_1 | Refer to Table 1 |
| Category_type_2 | Refer to Table 1 |
| Category_type_3 | Refer to Table 1 |
| Category_type_4 | Refer to Table 1 |
| Status | 0 - new |
| | 1 - completed |
| | 2 - responses sent |
| Message | Actual message sent (e.g. SMS) |
| Accuracy | Total weightage of message. |

### Location Identification Engine 3

This component is responsible for retrieving the location of the request originator (e.g. cell-id). This information will then be used by the pairing engine 4 to identify potential matches. In this embodiment, the location server is accessed by the engine 3 acting as a location services client using the OMA-MLP protocol.

The broker 1 can also determine the subscriber location from the received request message. An example of such a request is:"Trafalgar Square: looking to share a cab to London Airport". The classification engine is programmed to recognize certain locations when expressed in this format.

### Pairing Engine 4

This is triggered by the classification engine 2. The pairing engine prepares the query, and executes it to find out the corresponding matching message. If a matching entry is found, it then sends out a notification to both subscribers through the SMSC. It may stop sending matching information after a certain time, the TTL.

Query preparation and execution happens in a phased approach. First, the query is prepared for the best possible match and then it is executed on the database 5. If no result is found, then the query is prepared for a second best possible match and is executed, and so on until a least possible match query.

Each category has a corresponding "pairing" category associated with it, for example:

**Table 7: Pairing Categories**

| Type | Category | Pairing Category |
|---|---|---|
| Category type 1 | Looking | Available |
| Category type 1 | Available | Looking |
| Category type 1 | Sharing | Sharing |
| Category type 1 | Lost | Found |
| Category type 1 | Found | Lost |
| Category type 3 | Nokia | Nokia |

By default, the pairing category will be the same as the category name (refer to category 'Nokia' in the above table).

The following examples demonstrate the operation of the pairing engine 4 with the following messages already present in the database.

**Table 8: Transaction table entries example (with some columns not shown)**

| Msg_id | Category_type_1 | Category_type_2 | Category_type_3 | Category_type_4 |
|---|---|---|---|---|
| 001 | Available | Mobile Phone | Nokia | N91 |
| 002 | Found | Mobile Phone | Nokia | |
| 003 | Available | Mobile Phone | | |

### Example: A user wants to buy from another person a used (second hand) Nokia n91 mobile phone, and sends an SMS "looking for Nokia n91 mobile phone"

- The classification engine 2 classifies this message into the following categories as described above: Category_type_1 = "Looking", Category_type_2 = "Mobile Phone", Category_type_3 = "Nokia", and Category_type_4 = "N91".
- The classification engine 2 sends this information together with the location information (determined by the location identification engine), and the original message (including information such as for example originating subscriber MSISDN) and the TTL, to the pairing engine.
- The pairing engine first determines the "pairing categories" and forms the query.
   a. For example, pairing category for Category_type _1 i.e. "Looking" will be "Available" as per Table 7.
   b. The remaining pairing categories are the same as the category supplied by the classification engine, as no corresponding pairing category is specified (or the pairing category is the same as the category name as in the case of "Nokia" in this instance).
- The pairing engine 4 forms the following query:
   a. Category_type_1 = "Available" and
   b. Category_type_2 = "Mobile Phone" and
   c. Category_type_3 = "Nokia" and
   d. Category_type_4 = "N91" and
   e. Location_id = "XYZ" (Identified by location engine) and
   f. Time_to_live > Current Time and
   g. Status = "Valid"
- The pairing engine 4 executes this query and obtains the first entry with message_id = "001"
- The pairing engine 4 sends notifications to both subscribers.

### Example: A user has lost his Nokia 3310 mobile phone and sends an SMS "lost nokia 3310 mobile phone"

- The classification engine classifies this message into the following categories as described above: Category_type_1 = "Lost", Category_type_2 = "Mobile Phone", Category_type_3 = "Nokia", and Category_type_4 = "3310"
- The classification engine 2 sends this information together with the location information (determined by the location identification engine 3), and the original message (including information such as for example originating subscriber MSISDN), and the TTL to the pairing engine 4.
- The pairing engine 4 first determines the pairing categories and forms the query:
   a. For example, pairing category for Category_type_1 i.e. "Lost" will be "Found".
   b. The remaining pairing categories are the same as the category supplied by the classification engine, as no corresponding pairing category is specified (or the pairing category is the same as the category name as in the case of "Nokia" in this instance).
- The pairing engine 4 forms the following query:
   a. Category_type_1 = "Found" and
   b. Category_type_2 = "Mobile Phone" and
   c. Category_type_3 = "Nokia" and
   d. Category_type_4 = "3310" and
   e. Location_id = "XYZ" (identified by Location Engine) and
   f. Time_to_live > Current Time and
   g. Status = "Valid"
- The pairing engine 4 executes this query and finds no results.
- The pairing engine 4 then searches for a second best possible match with Category_type_4 removed from the query, i.e.
   a. Category_type_1 = "Found" and
   b. Category_type_2 = "Mobile Phone" and
   c. Category_type_3 = "Nokia" and
   d. Location_id = "XYZ" (identified by Location Engine) and
   e. Time_to_live > Current Time and
   f. Status = "Valid"
- The pairing engine 4 executes this query and obtains the second entry with message_id = "002"
- The pairing engine 4 sends notifications to both the subscribers.

In another example a user is looking for a second-hand Samsung R220 mobile phone and sends an SMS "looking for Samsung R220 mobile phone". In this example, the broker would need to execute three iterations for matching, obtaining the entry in Table 8 with message_id ="003".

### Storing matching entries

The matching entry is stored in the database 5 as specified in Table 8 and the notification is sent. Once the entry is stored, its message_id (e.g. 004) along with the pairing message_id (003 considering the "R220" example above) is stored in the Match table specified below.

**Table 9: Match Table**

| Message_id_a | Message_id_b |
|---|---|
| 004 | 003 |

The Match table described above is used when:
- A subscriber sends an SMS.
- He/She obtained some results (matching entries).
- He/She is not satisfied with the results and wants to see the next set of results.
- He/She sends an SMS with the same 'message_id'.
- The broker 1 sends back results with the previous results omitted. The match table helps in omitting the results that are already sent to the subscriber.

### Termination scenario

Consider a scenario when a subscriber obtained what he/she is looking for and wants to stop receiving any further messages from the operator. He/She sends an SMS to the operator with the same 'message_id' with a keyword 'stop'. Example: stop 003. On receiving this input, the classification engine 2 passes this input to the pairing engine 4 which will update the status of 'message_id' = 003 to 'COMPLETED' to indicate that entry is marked for purging.

### Purging Engine 15

This is responsible for purging the expired data from the database 5. It runs for a configurable period and deletes all entries from the table which have exceeded their 'Time - to - Live'. It also deletes the entries where the value of 'status' column of the message is set to 'COMPLETED'.

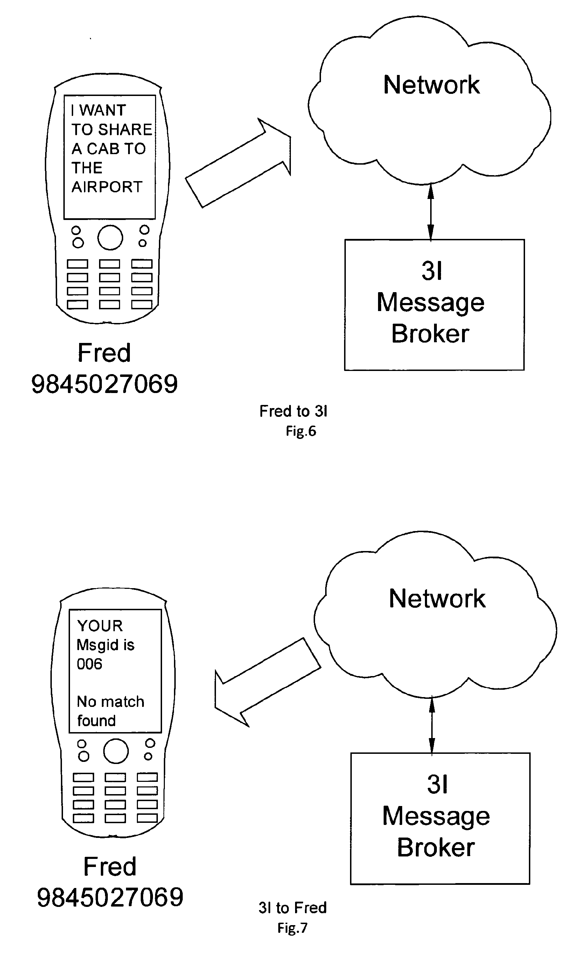

Consider the following example of two persons (Fred and John) standing in geographic proximity (e.g. same cell with cell-id 'Trafalgar Square') who would like to share a cab to the airport. As shown in Fig. 6 Fred sends a message 'I WANT TO SHARE A CAB TO THE AIRPORT' (e.g. an SMS to 8888). This message is then received by the broker 1 via the network. The broker 1 begins processing the message as illustrated in Fig. 4 and Fig. 5.
- The classification engine 2 as illustrated in Fig. 4, first invokes the location identification engine 3 (refer to step 3 of Fig. 4) to identify Fred's location.
   a. MSISDN=9845027069
- The engine 3 responds (refer to step 4 of Fig. 4) with
   a. Cell-Id ='Trafalgar Square'
- The classification engine 2 classifies the message (refer to step 5 of Fig. 4) into the following categories
   a. Category_type _1 = "Share" and
   b. Category_type_2 = "Taxi" and
   c. Category_type_3 = "Airport" and
   d. Category_type_4 = ""
   e. Time_to_live = "Oct 19, 2006 10:45:00"
- The classification engine 2 passes this information (original message including information such as for example originating subscriber MSISDN, location information, categories, and the TTL as above) to the pairing engine 4 (refer to step 6 of Fig. 4).
- The pairing engine 4 forms the query as explained above. This query is executed on the database 5 (refer to step 8 of Fig. 4).
- In this example, this query will result in 'no match'.
- The pairing engine 4 stores the record in the database 5 and the unique MessageId (e.g. 006) is generated.
- The MessageId and the information 'no match' is then sent to Fred as shown in Fig. 7 (refer to steps 9 and 10 in Fig. 4).

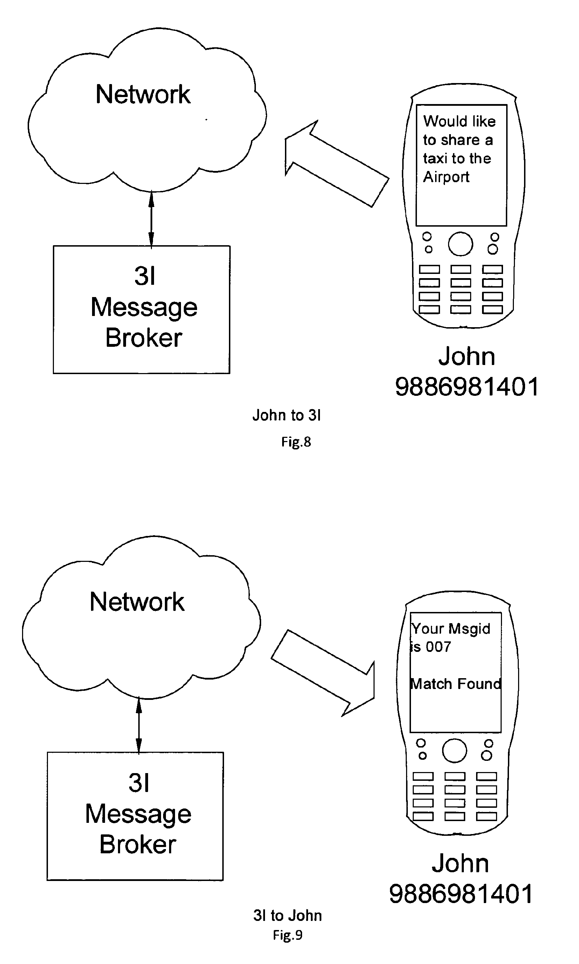

Consider a scenario in which after a minute John sends a message 'Would like to share a taxi to the Airport' (e.g. an SMS to 8888). This message is then received by the broker 1 via the network. The broker 1 starts processing the message as illustrated in Figs. 5, 8, 9.
- The classification engine 2 as illustrated in Fig. 5 first invokes the location identification engine 3 (refer to step 13) to identify John's location.
   a. MSISDN=9886981401
- The engine 3 responds (step 14 of Fig. 5) with
   b. Cell-Id = 'Trafalgar Square'
- The classification engine 2 classifies the message (refer to step 15 of Fig. 5) into the following categories:
   c. Category_type _1 = "Share" and
   d. Category_type_2 = "Taxi" and
   e. Category_type_3 = "Airport" and
   f. Category_type_4 = ""
   g. Time_to_live = "Oct 19, 2006 10:46:00"
- The classification engine 2 then passes this information (original message including information such as for example originating subscriber MSISDN, location information, categories, and the TTL as above) to the pairing engine 4 (refer to step 16 of Fig. 5).
- The pairing engine 4 forms the query as explained above. This query is then executed on the database (refer to step 18).
- In this example, this query results in a match with MessageId = 006.
- The pairing engine 4 then stores the record in the database and the unique MessageId (e.g. 007) is generated.
- The MessageId and the information 'Match Found' is then sent to John as shown in Fig. 9 (not shown in Fig. 5).

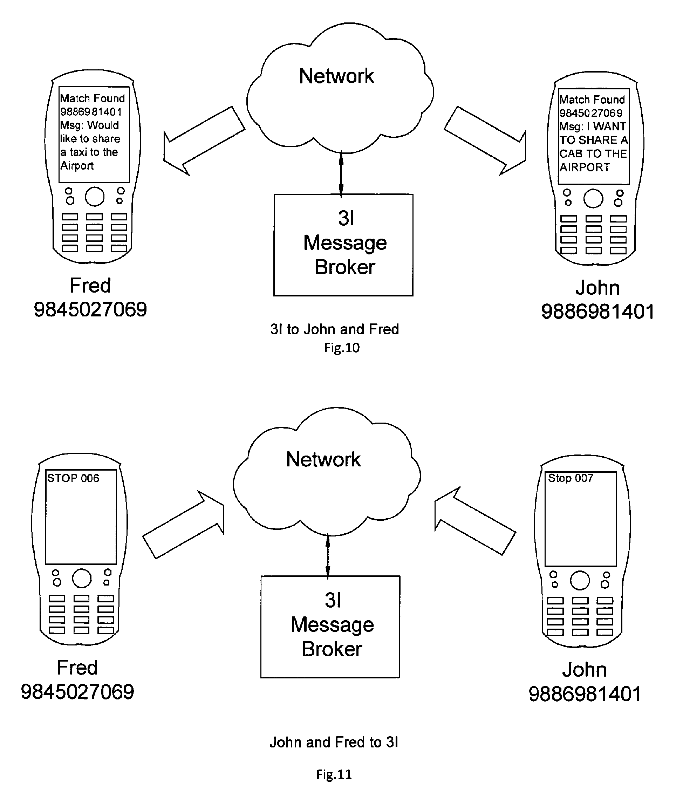

As shown in the Fig. 10 the broker 1 then informs Fred and John with the matched MSISDN and message details (refer to steps 20 and 21 of Fig. 5). Also, this match information is stored in the Match Table as explained above. Once Fred and John have, as in this example, each other's contact details, they can communicate to share a cab. Alternatively, once the match is done, the broker 1 could control the interactions between the subscribers for this transaction. This can be achieved by one or more of the applications 33 dynamically receiving incoming messages from one subscriber and routing them on to the other subscriber. The application 33 has access to the required addressing and matching information (for example in Tables 6 and 9) in the database(s) 5 to allow it to do this in a simple fashion. This allows the broker to provide post-matching instant information interchange for the transaction between the subscribers with anonymity.

As shown in Fig. 11, once the need is fulfilled, both John and Fred send a message each to the broker 1, to request that the sending of further matches ceases. On receiving this message, the broker 1 updates the status of the original messages (MsgId 006 and MsgId 007) to 'COMPLETED' as described above to indicate that the message is marked for purging.

Billing could be per message or on per session, or per match, for example.

### Application Examples

Share-a-cab: As described above and illustrated in Figs. 6 to 10.
Real Estate: One person vacating the house and the other looking for a house, though they both are in close vicinity.
Movie tickets: A person has a movie date, but the friend fails to turn up. Upset, he wants to sell the tickets. At the same moment there might be another couple disappointed at not getting the tickets as all are 'sold-out'.

### Pre-configured text tags.

Text tags for various categories can be configured in the system for subscribers. For instance, to share a cab, the text tag configured can be 'CAB'. So a subscriber can for example in an SMS embodiment send an SMS as:
CAB#airport

The above message means the subscriber is conveying 'I want to share a cab to the airport'.

The table below lists some text tag examples.

**Table 10: Text Tag Table**

| **Text Tag** | **Expansion** |
|---|---|
| CAB | Share-a-cab |
| DEAL | Looking for deals (on mobile phone etc.,) |
| AIRTIK | Looking for Air Tickets |
| MOVTIK | Looking for Movie Tickets |
| RENT | Looking for a house to rent |

| HOTEL | Looking for Hotel |
|---|---|
| L | L is for looking. Example: L for date |
| A | A is for available. Example: A Nokia N91 |
| S | S is for share. Example: S taxi to airport |

The invention not only supports the English language but all languages based on the Latin alphabet. So, a message written in English can be matched with a message written in French. For example: Considering Fig. 8, John instead of sending a message 'Would like to share a taxi to the airport', he sends the same message in French i.e. 'Partager un taxi a l'aéroport'. Referring to Table 2: The keyword 'Partager' is specified under 'Sharing' category and the keyword' l'aéroport' is specified under 'Airport' category. Hence it will still match Fred's request i.e. 'I want to share a cab to the airport'.

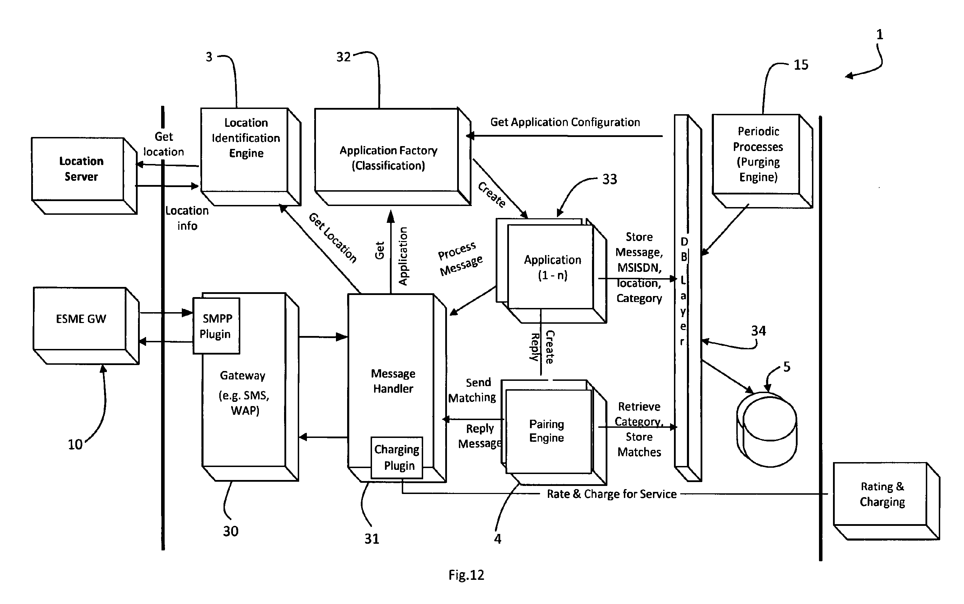

Fig. 12 shows the system 1 architecture in more detail. This implementation is in a 2G context.

A gateway 30 acts as an external interface of the message broker 1 for receiving and sending requests (e.g. SMS). This is a stand-alone process, which acts as a server to ESME GW and a client to a message handler 31 (see below). This has a framework which can load different plug-ins to communicate to different types of external entities (e.g. ESME GW, HTTP Server) as shown in 10 of Fig. 1 and an SMPP plug-in is loaded to communicate to ESME GW.

The message handler 31 defines the execution sequence of a message. It receives messages from the gateway 30 as well as from logic code of the pairing engine 4. The messages received from the gateway 30 are requests to process and the ones received from the engine 4 are responses. This module is also responsible for communications with external rating and charging interfaces.

The location identification engine 3 is responsible for retrieving the location (e.g. cell-id) of the user. This information will then be used by logic of the engine 4 to zero down on the list of perspective matches.

An application factory 32 is responsible for creating different applications inside the message broker 1. It handles responsibilities of the classification engine 2 and is also responsible for loading the application configurations from a database and creating instances of application objects for each configured application 33. The factory 32 is also responsible for maintaining the list of all application objects and their states. APIs are exposed to return the application instance for a particular application, upon request from the message handler 31. Dynamic loading of configuration data and creation of new application objects is also performed.

The applications 33 are application instances, which together with the application factory 32 comprise the classification engine 2. Regarding the application instances 33, for example, for 'Share-a-cab' there will be an application instance and for 'Real Estate' there will be another instance. Each application 33 has logic of the pairing engine 4 associated with it. This logic is unique to a particular application. The applications 33 are dynamically created and controlled by the application factory 32. The message handler 31 gets the application instances from the application factory 32 and uses them for processing.

The pairing engine 4 defines the pairing logic for an application 33. For each application 33, the logic is typically different. One (pairing) logic instance is associated with each (classification) application 33. The architecture is such that any object following the defined interface can be plugged in to provide logic for the application 33.

There is a database (DB) layer 34 which is responsible for making the application independent of the type of database being used, acting as a layer between the applications 33 and the database(s) 5. This is a framework where database-specific plug-ins are used. The databases 5 include the tables used by the various components of the broker 1.

Rating and charging of messages is performed by an external system, based on many parameters such as Type of Application, Time-To-Live (TTL), or location information. Both pre-paid and post-paid rating are supported through different plug-ins.

Periodic processes 15 handle all of the responsibilities of the purging engine 15. It cleans up the unwanted entries in the database.

Referring to Fig. 12, the following steps are carried out.
- SMPP plug-in receives the SMS and puts it in the internal queue for processing.
- One of the message handler 31 threads picks up the message.
- The message handler 31 contacts the location identification engine 3 requesting the subscriber location. The location identification engine 3 gets the location information from the location server.
- The message handler 31 contacts the application factory 32 requesting an instance of an application 33 which is capable of processing the message. The application factory 32 returns the correct application 33 having the classification logic. The application 33 then categorises the message.
- The message handler 31 passes the original message, the categories, the TTL, the originating MSISDN, and the location information to the pairing engine 4.
- The pairing engine 4 processes the message to find the relevant match from the database 5.
- The application 33 puts the response messages (matched results) to another internal queue and they are passed via the message handler 31 to the gateway 30.
- An SMPP plug-in finally prepares and sends the response to the user(s).

It will be appreciated that the invention provides a system for real time dynamic information interchange between mobile subscribers so that actions which arise asynchronously may be performed.

The invention is not limited to the embodiments described but may be varied in construction and detail. The described embodiments make use of SMS as the medium of information exchange in a 2G network, however other technologies such as for example 2.5G, 3G, WAP and IMS can alternatively be used. For example the request messages may be SMS, a WAP request, a HTTP request, or an IMS message, depending on the context. The messages are passed through the respective network elements as appropriate (e.g. ESME GW, SMSC, WAP GW, HTTP Server). The message broker 1 can be implemented in the context of various network technologies such as GSM, CDMA, Wire line, and Internet, that are capable of sending/receiving messages (e.g. text messages) and capable of providing location information.

In 2.5G/3G, the message broker 1 may be integrated to the network as an application server to receive the request messages. Once the request is received by the broker, the process of classification, pairing, and location detection is used to enable instant information interchange.

In an IMS context the broker can be integrated to the packet network as an application in a SIP application server to receive a message request originated by a subscriber. Once the request is received the process of classification, pairing, and location detection is used to enable instant information interchange. While this is a preferred IMS embodiment, it is envisaged that other embodiments are possible where other suitable interfaces can be employed.

Also, although not illustrated, the system of the invention may itself include a location server.

Further, in other embodiments natural languages other than those based on the Latin alphabet are supported.

There are various existing technologies (already in the public domain) to provide a rich set of subscriber location information from an external location server, which can be used in various embodiments with appropriate modification of the classification and pairing engines. Examples are GSM/3GPP Location Services (LCS) and OMA MLP-based technologies. In another embodiment, a program in the mobile device may retrieve or determine its location information and upload it to the broker in the request.

## Claims

1. A message broker (1) comprising:
an interface (2) comprising means for receiving, via a mobile network (10), request messages originating in subscriber mobile devices;
a location identification engine (3);
a classification engine (2) comprising means for, in real time, determining from the location identification engine (3) locations of originating mobile devices for received messages, and for classifying each received message according to category of request and location of the originating device, to provide filtered requests;
a pairing engine (4) comprising means for, in real time, matching filtered requests; and
an interface (4) comprising means for sending, in real time, messages to at least two originating mobile devices according to said matching to provide real time information interchange, said messages including information identifying matching requests.

2. A message broker as claimed in claim 1, wherein the classification engine (2) comprises means for parsing incoming messages to determine their content.

3. A message broker as claimed in claim 2, wherein the parsing means identifies keywords, and the classification engine (2) also comprises means for associating identified key words with a category according to a category table.

4. A message broker as claimed in claim 3 wherein the table associates a plurality of key words with some categories.

5. A message broker as claimed in claim 4, wherein each key word has a weighting according to its relevance to the category.

6. A message broker as claimed in any of claims 3 to 5 wherein there is a category for each of a plurality of request types.

7. A message broker as claimed in any of claims 3 to 6, wherein the categories are inter-linked by parent/child associations.

8. A message broker as claimed in claim 7, wherein the pairing engine (4) comprises means for identifying successive category pairs in parent/child hierarchy traversal.

9. A message broker as claimed in any of claims 3 to 8, wherein the key words include pre-allocated text tags.

10. A message broker as claimed in any of claims 2 to 9, wherein the parsing means recognises words from different natural languages, and the pairing engine (4) comprises means for matching requests having different natural languages.

11. A message broker as claimed in any preceding claim, wherein the classification engine (2) comprises means for assigning a time-to-live value to a request message, and the broker attempts matching of the message only during the time span of the time-to-live value.

12. A message broker as claimed in claim 11, wherein the classification engine (2) comprises means for determining the time-to-live value according to request message category.

13. A message broker as claimed in any preceding claim, wherein the pairing engine (4) comprises means for interrogating a database (5) to identify matches, the database storing tables of pairing categories.

14. A message broker as claimed in claim 13, wherein the database (5) comprises means for maintaining a transaction table of paired messages.

15. A message broker as claimed in claim 14, wherein the broker comprises means for updating the database (5) with status data indicating status of an information interchange.

16. A message broker as claimed in claim 15, wherein the broker (1) comprises means for updating the status data in response to receiving a termination instruction from a user device.

17. A message broker as claimed in either of claims 15 or 16, wherein the broker further comprises a purging engine (15) for purging the database (5) of old transaction data.

18. A message broker as claimed in claim 17, wherein the purging engine (15) comprises means for purging on the basis of the time-to-live values.

19. A message broker as claimed in any preceding claim, wherein the location identification engine (3) is a client of an external location server.

20. A message broker as claimed in any preceding claim, wherein the classification engine (2) comprises means for determining location of a subscriber by parsing a received message including a field including a location identifier.

21. A message broker as claimed in any preceding claim, wherein the interface comprises plug-in modules each for communication with a type of external entity.

22. A message broker as claimed in claim 21, wherein the interface further comprises a message handler (31) for receiving and routing messages to and from the interface and to and from internal components of the broker.

23. A message broker as claimed in any preceding claim wherein the classification engine (2) comprises at least one application (33) and an application factory (32) for dynamically instantiating application instances in real time.

24. A message broker as claimed in claim 23, wherein the pairing engine (4) comprises logic code coupled with application instances.

25. A message broker as claimed in any preceding claim, further comprising post-matching messaging means for performing message interchange between matched subscribers for them to communicate after being matched.

26. A message broker as claimed in claim 25, wherein the post-matching messaging means comprises means for passing messages between the matched subscribers without need for either subscriber to address the other subscriber.

27. A message broker as claimed in claims 25 or 26, wherein the post-matching messaging means comprises means for accessing addressing and matching information stored during the pre-matching operations.

28. A computer readable medium comprising software code for performing operations of a message broker as claimed in any preceding claim when executing on a digital processor.
